# EUROPÄISCHE PATENTSCHRIFT

(11) **EP 0 701 722 B1**
(45) Veröffentlichungstag und Bekanntmachung des Hinweises auf die Patenterteilung: **05.11.1997**
(21) Anmeldenummer: 94915048.6
(22) Anmeldetag: 18.05.1994
(51) Int. Cl.: G07B 15/00

(54) **EINRICHTUNG IN EINEM FAHRZEUG ZUR ABRECHNUNG DER NUTZUNG GEBÜHRENPFLICHTIGER WEGSTRECKEN**
DEVICE IN A VEHICLE FOR CHARGING FOR THE USE OF TOLL ROADS
DISPOSITIF PLACE DANS UN VEHICULE PERMETTANT D'EFFECTUER UN DEBIT CORRESPONDANT A L'UTILISATION DE TRONCONS A PEAGE

(30) Priorität: 28.05.1993 DE 4318352; 11.11.1993 DE 4339004
(43) Veröffentlichungstag der Anmeldung: 20.03.1996
(73) Patentinhaber: MANNESMANN Aktiengesellschaft, 40213 Düsseldorf (DE)
(72) Erfinder: HERDEG, Wolfgang, D-73479 Ellwangen (DE); WIDL, Andreas, D-81667 München (DE)
(74) Vertreter: Presting, Hans-Joachim, Dipl.-Ing.
(86) Internationale Anmeldenummer: DE9400585
(87) Internationale Veröffentlichungsnummer: WO9428510

(56) Entgegenhaltungen:
- EP-A- 0 425 961
- EP-A- 0 508 405
- WO-A-88/09541
- WO-A-90/15401
- DE-A- 3 023 427
- DE-A- 4 039 887
- VEHICLE NAVIGATION & INFORMATION SYSTEMS, 11. September 1989, TORONTO,CA Seiten A31 - A35, XP000089920 DAVIES 'Automatic Vehicle Idendification to Support Driver Information Systems'
- VEHICLE NAVIGATION & INFORMATION SYSTEMS CONFERENCE PROCEEDINGS, Oktober 1991, P-253, PART 2 Seiten 977 - 987, XP000357202 KOMANECKY 'IVHS Applications of Smart Cards'

## Beschreibung

Die Erfindung betrifft eine Einrichtung in einem Fahrzeug zur fahrzeuginternen elektronischen Abrechnung der Nutzung gebührenpflichtiger Wegstrecken, die von einem Fahrzeug zurückgelegt werden.

Der EP-A-0 425 961 ist eine Einrichtung zur fahrzeuginternen elektronischen Abrechnung der Nutzung gebührenpflichtiger Wegstrecken bekannt. Es handelt sich dabei um ein automatisches Abbuchungssystem, das auf der Installation einer umfangreichen Infrastruktur innerhalb des gebührenpflichtigen Straßennetzes basiert, d.h. alle Ein- und Ausfahrtsstellen müssen mit einer aufwendigen Gerätetechnik ausgerüstet sein. Das Fahrzeug selbst weist eine drahtlose Empfangseinrichtung auf, deren empfangene Informationen zur Identifizierung gebührenpflichtiger Wegstrecken von einer Recheneinrichtung ausgewertet werden, um die automatische Abbuchung der anfallenden Nutzungsgebühren von einer Speichereinrichtung (Wertspeicherkarte) veranlassen. Die bekannte Einrichtung weist weiterhin eine zusätzliche Gerätekomponente zur Selbstüberwachung auf unautorisierte Manipulationen an den Gerätekomponenten auf, wobei im Falle derartiger Manipulationen ein NICHT-in-ORDNUNG Signal ausgegeben und über die Signaleinrichtung abgegeben.
In der DE-A-40 39 887 ist beschrieben, über Bakengeräte drahtlos Informationen zur Erkennung der aktuellen geographischen Position zu einem Fahrzeug zu übermitteln und die Bestätigung der ordnungsgemäß erfolgten Abbuchung von einer Guthabenkarte im Fahrzeug durch einen weiteren Sender vom Fahrzeug anzufordern und drahtlos in Form einer Quittungsmeldung zu übermitteln.
Aus der DE-A-30 23 427 ist eine Einrichtung der hier in Rede stehenden Art bekannt, deren Gerätekomponenten unautorisierte Manipulationen durch eine Verplombung gesichert sind, wobei eine Verletzung der Verplombung automatisch ein Signal an eine mittels sensorenarbeitende Selbstüberwachung gibt.
Aus WO-A-90/15401 ist es bekannt, bei einem fahrzeuginternen Abbuchungssystem die in der Einrichtung eingesetzten Programme und Daten zu verschlüsseln und ferner einen Fehlerspeicher in Form einer Chip-Karte vorzusehen, die gleichzeitig als Wertguthabenmarke vom Nutzer des Fahrzeugs zum Betrieb der Einrichtung benötigt wird, wobei diese Chip-Karte als Smart-Karte ausgebildet sein kann.
Aus der Literaturstelle "VEHICLE NAVIGATION & INFORMATION SYSTEMS", 1989, Seiten A-31 bis A-35 geht eine Signaleinrichtung zur Erkennung des ordnungsgemäßen Betriebszustandes eines fahrzeuginternen Abbuchungssystemes hervor, die elektrische, akustische oder optische Signale aussendet.

Der Erfindung liegt die Aufgabe zugrunde, eine Einrichtung in einem Fahrzeug zur fahrzeuginternen elektronischen Abrechnung der Nutzung gebührenpflichtiger Wegstrecken, bei der zur Erkennung der aktuellen geographischen Position des Fahrzeugs auf Satellitennavigation oder Funkpeilung beruhende Informationen empfangen werden, so auszubilden, daß ein wirksamer Schutz gegen unautorisierte Manipulationen an den im Fahrzeug mitgeführten Gerätekomponenten oder an der eingesetzten Soft-ware erreicht wird.

Gelöst wird diese Rufgabe erfindungsgemäß mit den Merkmalen des Patentanspruchs 1. vorteilhafte Weiterbildungen der Erfindung sind in den Unteransprüchen 2 bis 9 angegeben.

Die Erfindung sieht vor, die im Fahrzeug mitgeführte Einrichtung mit einer zusätzlichen Gerätekomponente auszustatten, die eine Selbstüberwachung auf unautorisierte Manipulationen an den einzelnen Gerätekomponenten vornimmt und funktional auch durch eine bereits vorhandene Gerätekomponente realisiert werden kann. Wenn durch die Selbstüberwachung eine derartige Manipulation festgestellt wird, wird dies mit entsprechenden diagnostizierenden Daten (z.B. Art und Zeitpunkt der Manipulation, betroffene Gerätekomponente) auf einem Fehlerspeicher, der vorzugsweise mit einem als Chip-Karte (insbesondere Smart-Karte) ausgebildeten Wertguthabenspeicher des jeweiligen Nutzers identisch ist, wenn dieser zum Betrieb des Systems zwingend erforderlich ist. Dies soll eine zuverlässige Beweisführung bei der Verfolgung solcher Manipulationen erlauben. Darüber hinaus ist vorgesehen, damit überhaupt ein Mißbrauch von außen erkannt werden kann, daß eine Signaleinrichtung ein Signal nach außen sendet, das Rufschluß über den ordnungsgemäßen oder im Mißbrauchsfall über den manipulierten Betrieb (Nicht-In-Ordnung-Signal) der Einrichtung gibt. In letzterem Fall wird außerdem die Funktion der Einrichtung automatisch gesperrt, es erfolgt also keine weitere Gebührenabrechnung mehr. Die "Aussendung" des Nicht-In-Ordnung-Signals kann selbstverständlich auch darin bestehen, daß lediglich die Russendung eines sonst in regelmäßigen Zeitabständen oder auch auf entsprechende drahtlose Rnfrage eines außerhalb des jeweiligen Fahrzeugs befindlichen Kontrollgeräts abgegebenen In-Ordnung-Signals unterbleibt.

Um die Selbstüberwachung der Einrichtung zu erleichtern, sollten die benötigten Gerätekomponenten, also Empfangseinrichtung, Recheneinrichtung, Speichereinrichtung, Signaleinrichtung und selbstverständlich auch die Gerätekomponente zur Selbstüberwachung eingehaust sein, wobei es besonders bevorzugt ist, möglichst alle wesentlichen Komponenten in einem einzigen Gehäuse unterzubringen. Es versteht sich von selbst, daß dies kaum vollständig gelingen kann, weil beispielsweise eine Rntenne zum Empfang der Informationen zur Fahrzeugpositionserkennung zweckmäßigerweise außen am Fahrzeug angebracht wird. Ein wesentlicher Schutz kann bereits dadurch erreicht werden, daß das oder die Gehäuse der Einrichtung verplombt werden. Dabei ist allerdings vorgesehen, daß der Draht für die Verplombung mit einem elektrischen Leiter undloder einem Lichtwellenleiter versehen ist, dessen Leitungsdurchgang geprüft und zur automatischen Erkennung einer unautorisierten Manipulation genutzt werden kann. Zusätzlich oder alternativ können das oder die Gehäuse auch mit vorzugsweise berührungslos arbeitenden (z.B. induktiv, kapazitiv, optisch, magnetisch) Sensoren ausgestattet werden, die eine unveränderte Position bestimmter Gehäuseteile undloder der Gerätekomponenten zueinander überwachen und somit ein öffnen des Gehäuses erkennbar machen.

Eine wesentliche Erhöhung der Schutzwirkung gegen Manipulationen läßt sich dadurch erreichen, daß die einzelnen Gerätekomponenten und möglichst auch die verwendeten Softwarekomponenten in der Einrichtung mit geheimen Datenkennungen versehen werden, die während des Betriebs gegenseitig oder von einer zentralen Einrichtung abgefragt und überprüft werden. Hierdurch kann sofort erkannt werden, daß z.B. ein unberechtigter Rustausch einer Gerätekomponente gegen eine manipulierte Komponente erfolgt ist, selbst wenn die überwachung bezüglich eines Öffnens des Gehäuses erfolgreich umgangen wurde. Darüber hinaus sollte gewährleistet sein, daß alle softwaremäßigen Komponenten einschließlich der benötigten Datenbasis stets nur in verschlüsselter Form eingesetzt werden.

Das Nicht-In-Ordnung-Signal bzw. das (im Manipulationsfall unterbleibende) In-Ordnung-Signal, das außerhalb des Fahrzeugs empfangen werden kann, sollte möglichst einfach und sicher übermittelbar und möglichst auch maschinell verarbeitbar sein. Daher empfiehlt sich insbesondere eine Sendeeinrichtung für HF-, RF-, Ultraschall- oder Infrarot-Signale. Rber auch eine Signalübermittlung im Bereich des sichtbaren Lichts ist denkbar.

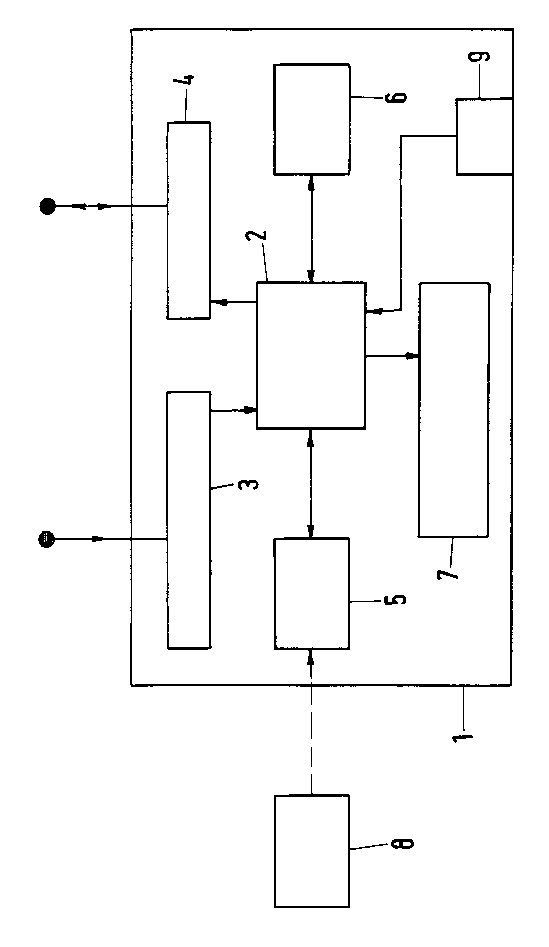

Die Erfindung wird nachfolgend anhand eines Ausführungsbeispiels, das in der einzigen Figur schematisch dargestellt ist, näher erläutert.

Die Einrichtung zur fahrzeuginternen Rbrechnung von beispielsweise Autobahnbenutzungsgebühren ist im wesentlichen in einem einzigen geschlossenen Gehäuse 1 untergebracht. Kern der Einrichtung ist eine Recheneinrichtung 2, die mit einer Speichereinrichtung 6 und einer Kartenlese/Schreibeinrichtung 5 datentechnisch verbunden ist. Weiterhin ist an die Recheneinrichtung 2 ein Empfänger 3 für den Empfang von Daten angeschlossen, die von einem Satellitennavigationssystem (z.B. GPS) gesendet werden und in der Recheneinrichtung 2 zur Ermittlung der aktuellen Fahrzeugposition herangezogen werden. In der Speichereinrichtung 6 sind neben geographischen Daten zur eindeutigen Identifizierung der gebührenpflichtigen Autobahnteilstrecken auch die aktuell gültigen Streckentarife abgelegt. Sobald die Recheneinheit das Einfahren in eine neue gebührenpflichtige Teilstrecke festgestellt hat, wird die Ermittlung der zugehörigen Benutzungsgebühr von der Recheneinheit 2 vorgenommen und auf einem Display 7 für den Fahrer des Fahrzeugs lesbar angezeigt. Außerdem erfolgt über die Kartenlese/Schreibeinrichtung 5 eine entsprechende Verbuchung auf einer Wertspeicherkarte 8, die vorzugsweise als Smart-Karte ausgebildet ist und auf der das aktuelle Gebührenguthaben des Fahrers gespeichert ist. Nach Rbbuchung der jeweiligen Nutzungsgebühr kann das noch verbleibende Wertguthaben dem Fahrer wiederum über das Display 7 angezeigt werden. Das Gehäuse 1, in dem fast alle benötigten Gerätekomponenten untergebracht sind, ist (nicht dargestellt) durch eine elektronisch überwachte Verplombung gegen unbefugtes öffnen gesichert. Eine Verletzung der Verplombung würde sofort von der Recheneinheit 2, die mit einer entsprechenden Zusatzfunktion ausgestattet ist, erkannt werden und würde zu einer Speicherung der diesen Eingriff diagnostizierenden Daten zur Beweissicherung (z.B. Zeitpunkt und Fehlercode zur Kennzeichnung der Rrt der Manipulation) entweder auf der Speichereinrichtung 6 oder auf der Chip-Karte 8 führen. Zusätzlich wird das Gehäuse 1 durch berührungslos arbeitende Abstandssensoren 9 auf ein unberechtigtes öffnen überwacht. Entsprechende Eingriffe, die zu einer irgendwie gearteten Veränderungen der Gerätekonfiguration führen, würden wiederum sofort als Signal an die Recheneinrichtung 2 gemeldet. Darüber hinaus sind alle Gerätekomponenten mit einer geheimen Datenkennung versehen, die von der zentralen Recheneinrichtung 2 in kurzen Zeitabständen überprüft wird. Ein unberechtigter Komponentenaustausch würde sofort wiederum als Manipulation erkannt werden. Dies würde zu einer sofortigen Blockade der normalen Abrechnungsfunktionen der Einrichtung führen.

Um die Ordnungsmäßigkeit des Betriebs der Einrichtung jederzeit von außerhalb des Fahrzeugs überprüfen zu können, ist eine Signaleinrichtung 4 mit der Recheneinrichtung 2 verbunden. Diese Signaleinrichtung 4 ist beispielsweise als HF-Sende/Empfangseinrichtung ausgebildet und kann auf eine entsprechende von außen kommende Rnfrage signalisieren, ob ein ordnungsgemäßer Betriebszustand vorliegt oder nicht. Es kann aber auch vorgesehen sein, daß ein entsprechendes Nicht-In-Ordnung-Signal im Manipulationsfall fortlaufend, also ohne besondere Rufforderung abgegeben wird. Die Signaleinrichtung 4 könnte auch außerhalb des Gehäuses 1 untergebracht sein, müßte dann aber ebenso gegen Manipulationen geschützt sein.

Sobald eine unbefugte Manipulation von der Selbstüberwachung der Einrichtung erkannt wird, löst sie ihre Selbstblockade aus, stellt also ihren normalen bestimmungsgemäßen Betrieb sofort ein. Wird nun von einer außerhalb des Fahrzeugs befindlichen Kontrolleinrichtung, die fest im Streckennetz installiert sein kann, zweckmäßigerweise aber als mobile Rnlage konzipiert und z.B. in einem Kontrollfahrzeug untergebracht ist, ein unautorisierter Eingriff in die Einrichtung entdeckt, dann wird beispielsweise wie bei einer Radar-Geschwindigkeitsüberwachung automatisch von dem betroffenen Fahrzeug ein identifizierendes Foto gemacht und das Fahrzeug im Rahmen einer anschließenden Verkehrskontrolle angehalten. Durch Ruslesen der auf der Chip-Karte undloder der Speichereinrichtung 6 gespeicherten diagnostizierenden Daten über die Manipulation kann diese genau ermittelt und beweissichernd für eine strafrechtliche Verfolgung der Rngelegenheit dokumentiert werden.

## Patentansprüche

1. Einrichtung in einem Fahrzeug zur fahrzeuginternen elektronischen Abrechnung der Nutzung von gebührenpflichtigen Wegstrecken, die von einem Fahrzeug zurückgelegt werden, mit
- einer Empfangseinrichtung (3) zum drahtlosen Empfang von auf der Satellitennavigation oder der Funkpeilung beruhenden Informationen zur Erkennung der aktuellen geographischen Fahrzeugposition,
- einer Recheneinrichtung (2) zur Identifizierung der Benutzung gebührenpflichtiger Wegstrecken durch das Fahrzeug und zur Ermittlung der jeweiligen Nutzungsgebühr,
- Speichermitteln (Speichereinrichtung 6, Chip-Karte 8) zur Verbuchung der Nutzungsgebühren,
- einer Einrichtung zur Selbstüberwachung (9) auf unautorisierte Manipulationen an den einzelnen Gerätekomponenten,
- einem Fehlerspeicher (Speichereinrichtung 6, Chip-Karte 8) zur Aufzeichnung diagnostizierender Daten im Falle einer unautorisierten Manipulation und
- einer Signaleinrichtung (4) zur Aussendung eines Signals für die Erkennung eines ordnungsgemäßen Betriebszustands der Einrichtung und die Aussendung eines Nicht-In-Ordnung-Signals im Falle unautorisierter Manipulationen,
wobei die Einrichtung zur Selbstüberwachung (9) nach Feststellung einer unautorisierten Manipulation eine sofortige Sperre bezüglich sonstiger Funktionen der Einrichtung auslöst.

2. Einrichtung nach Anspruch 1,
dadurch gekennzeichnet,
daß die Gerätekomponenten in einem oder mehreren Gehäusen (1) untergebracht sind, die gegen ein öffnen durch eine Verplombung, welche an einem elektrischen Draht oder einem Lichtwellenleiter angebracht ist, gesichert sind, wobei eine Verletzung der Verplombung automatisch ein Signal an die Selbstüberwachung gibt.

3. Einrichtung nach Anspruch 1 oder 2,
dadurch gekennzeichnet,
daß zur Selbstüberwachung in dem/den Gehäusetn) (1) der Gerätekomponenten nichtberührende Sensoren die Position bestimmter Gehäuseteile oder Gerätekomponenten zueinander überwachen.

4. Einrichtung nach Anspruch 3,
dadurch gekennzeichnet,
daß die Sensoren (9) induktiv oder kapazitiv oder optisch oder magnetisch arbeitend ausgebildet sind.

5. Einrichtung nach einem der Ansprüche 1 bis 4,
dadurch gekennzeichnet,
daß die Gerätekomponenten (2 bis 7, 9) in der Einrichtung mit geheimen Datenkennungen versehen sind, die während des Betriebs gegenseitig oder von einer zentralen Einrichtung abgefragt und überprüft werden.

6. Einrichtung nach einem der Ansprüche 1 bis 5,
dadurch gekennzeichnet,
daß die in der Einrichtung eingesetzten softwaremäßigen Komponenten (Programme und Daten) in verschlüsselter Form eingesetzt sind.

7. Einrichtung nach einem der Ansprüche 1 bis 6,
dadurch gekennzeichnet,
daß der Fehlerspeicher eine chip-Karte (8) ist, die gleichzeitig als Wertguthabenkarte vom Nutzer des Fahrzeugs zum Betrieb der Einrichtung benötigt wird und auf der die angefallenen Nutzungsgebühren abgebucht werden.

8. Einrichtung nach Anspruch 7,
dadurch gekennzeichnet,
daß die Chip-Karte (8) als Smart-Karte ausgebildet ist.

9. Einrichtung nach einem der Ansprüche 1 bis 8,
dadurch gekennzeichnet,
daß die Signaleinrichtung (4) zur Erkennung des ordnungsgemäßen Betriebszustandes HF-, RF-, Ultraschall-, Infrarot- oder optische Signale aussendet.

## Claims

1. Device in a vehicle for the settlement of charges by electronic means, inside the vehicle, for the utilisation of toll routes travelled by a vehicle, with
- a receiving device (3) for wireless reception of satellite navigation- or radio direction finding-based information for detecting the actual geographical vehicle position,
- a calculating device (2) for identifying the use of toll routes by the vehicle and for determining the respective utilisation charge,
- storage means (storage device 6, chip card 8) for logging the utilisation charges,
- a self-monitoring device (9) for unauthorised manipulations of the individual instrument components,
- an error memory (storage device 6, chip card 8) for recording diagnostic data in the case of an unauthorised manipulation, and
- a signal device (4) for emitting a signal for indicating that the device is operating correctly and for emitting a Not-In-Order signal in the case of unauthorised manipulations,
wherein the self-monitoring device (9) triggers an immediate inhibiting action with respect to other functions of the device following the detection of an unauthorised manipulation.

2. Device according to claim 1, characterised in that the instrument components are accommodated in one or more housings (1) which are protected against opening by a lead seal which is provided on an electrical wire or an optical wave guide, wherein a signal is automatically delivered to the self-monitoring device if the lead seal is violated.

3. Device according to claim 1 or 2, characterised in that the self-monitoring in the housing(s) (1) of the instrument components is carried out by non-contacting sensors which monitor the position of certain housing parts or instrument components in relation to one another.

4. Device according to claim 3, characterised in that the sensors (9) are formed so as to operate by inductive or capacitive or optical or magnetic means.

5. Device according to one of claims 1 to 4, characterised in that the instrument components (2 to 7, 9) in the device are provided with secret data identifications which are interrogated and checked on a mutual basis or by a central device during operation.

6. Device according to one of claims 1 to 5, characterised in that the software components (programs and data) used in the device are used in a coded form.

7. Device according to one of claims 1 to 6, characterised in that the error memory is a chip card (8) which is at the same time required by the vehicle user as a credit card to operate the device and from which the incurred utilisation charges are debited.

8. Device according to claim 7, characterised in that the chip card (8) is formed as a smart card.

9. Device according to one of claims 1 to 8, characterised in that the signal device (4) for indicating that the device is operating correctly emits HF, RF, ultrasonic, infrared or optical signals.

## Revendications

1. Dispositif dans un véhicule pour le décompte électronique interne au véhicule de l'utilisation de tronçons de route à péage qui sont parcourus par un véhicule, comportant :
- un dispositif de réception (3) pour la réception sans fil d'informations reposant sur la navigation par satellites ou le radiorepérage pour reconnaître la position géographique actuelle du véhicule,
- un dispositif de calcul (2) pour identifier l'utilisation de tronçons de route à péage par le véhicule et pour déterminer le coût d'utilisation respectif,
- des moyens de mémorisation (dispositif à mémoire 6, carte à puce 8) pour comptabiliser les coûts d'utilisation,
- un dispositif pour l'autosurveillance (9) de manipulations non autorisées de composants individuels de l'appareil,
- une mémoire d'erreur (dispositif à mémoire 6, carte à puce 8) pour enregistrer des données de diagnostic dans le cas d'une manipulation non autorisée, et
- un dispositif de signalisation (4) pour émettre un signal pour la reconnaissance d'un état de fonctionnement en ordre du dispositif et pour émettre un signal de non-régularité dans le cas de manipulations non autorisées,
le dispositif pour l'autosurveillance (9), après détermination d'une manipulation non autorisée, déclenchant un arrêt immédiat relativement à des fonctions quelconques du dispositif.

2. Dispositif selon la revendication 1,
caractérisé en ce que les composants de l'appareil sont agencés dans un ou plusieurs boîtiers (1), qui sont protégés contre une ouverture par un plomb qui est appliqué sur un fil électrique ou un guide d'ondes lumineuses, une rupture du plomb fournissant automatiquement un signal à l'autosurveillance.

3. Dispositif selon la revendication 1 ou 2,
caractérisé en ce que, pour l'autosurveillance dans le ou les boîtiers (1) des composants de l'appareil, des capteurs sans contact surveillent la position de parties de boîtier ou de composants de l'appareil déterminés, les uns par rapport aux autres.

4. Dispositif selon la revendication 3,
caractérisé en ce que les capteurs (9) sont réalisés en travaillant de façon inductive ou capacitive ou optique ou magnétique.

5. Dispositif selon une des revendications 1 à 4,
caractérisé en ce que les composants de l'appareil (2 à 7,9) dans le dispositif sont munis d'identifications caractéristiques secrètes qui, pendant le fonctionnement, sont appelées et vérifiées mutuellement ou par un dispositif central.

6. Dispositif selon une des revendications 1 à 5,
caractérisé en ce que les composants logiciels prévus dans le dispositif (programmes et données) sont prévus sous forme codée.

7. Dispositif selon une des revendications 1 à 6,
caractérisé en ce que la mémoire d'erreur est une carte à puce (8) qui est nécessaire simultanément comme carte de crédit par l'utilisateur du véhicule pour le fonctionnement du dispositif, et sur laquelle les coûts d'utilisation concernés sont débités.

8. Dispositif selon la revendication 7,
caractérisé en ce que la carte à puce (8) est réalisée comme carte à microprocesseur.

9. Dispositif selon une des revendications 1 à 8,
caractérisé en ce que le dispositif de signalisation (4) pour reconnaître l'état de fonctionnement en ordre émet des signaux à hautes fréquences, à radiofréquences, ultrasonores, infrarouges ou optiques.
